Europäisches Patentamt

European Patent Office

Office européen des brevets

(19)

(11) Veröffentlichungsnummer: **0 275 960**
**A2**

(12) # EUROPÄISCHE PATENTANMELDUNG

(21) Anmeldenummer: **88100635.7**

(51) Int. Cl.⁴: **H01H 9/56**

(22) Anmeldetag: **19.01.88**

(30) Priorität: **21.01.87 DE 3701588**

(43) Veröffentlichungstag der Anmeldung:
**27.07.88 Patentblatt  88/30**

(84) Benannte Vertragsstaaten:
**DE FR GB IT**

(71) Anmelder: **DIEHL GMBH & CO.**
**Stephanstrasse 49**
**D-8500 Nürnberg(DE)**

(72) Erfinder: **Meisner, Alfred**
**Ewaldstrasse 40**
**D-8500 Nürnberg(DE)**
Erfinder: **Stürzl, Wilhelm**
**Wiesenstrasse 12**
**D-8501 Winkelhaid(DE)**
Erfinder: **Böhm, Jürgen**
**Lilienstrasse 12**
**D-8561 Reichenschwand(DE)**

(54) **Schalteinrichtung für eine induktive Last.**

(57) Eine Schalteinrichtung für eine induktive Last,
insbesondere einen Transformator eines Mikrowellenkochgeräts, weist einen Schaltkontakt eines Relais in Reihe zur Last auf. Um beim Schalten der
Last Stromstöße zu vermeiden, ohne daß ein Triac
über die gesamte Einschaltdauer den Laststrom
führt, ist parallel zum Schaltkontakt(6) ein Triac(5)
geschaltet. Auf ein Einschaltsignal wird der Triac(5)
im Stromnulldurchgang gezündet, wonach der
Schaltkontakt(6) schließt und den Laststrom
übernimmt. Auf ein Abschaltsignal wird der
Schaltkontakt(6) geöffnet und der Triac(5) übernimmt
den Laststrom, bis er beim folgenden Stromnulldurchgang abschaltet.

**Fig. 1**

EP 0 275 960 A2

## Schalteinrichtung für eine induktive Last

Die Erfindung betrifft eine Schalteinrichtung für eine induktive Last, insbesondere einen Transformator eines Mikrowellenkochgeräts, mit einem Schaltkontakt eines Relais in Reihe zur Last.

In einem Mikrowellenkochgerät wird ein Transformator zum Betrieb eines Magnetrons verwendet. Der Transformator hat meist eine Leistung von über 1 kVA. Die Mikrowellenleistung wird in diesen Geräten durch Takten des Transformators und damit des Magnetrons eingestellt. Die Mikrowellenleistung wird dabei durch das Einschaltdauerverhältnis gesteuert.

Zum Schalten des Transformators wird nach dem Stand der Technik ein Relais verwendet. Infolge der Steuerung des Einschaltdauerverhältnisses ergibt sich eine hohe Schalthäufigkeit. Im Einschaltmoment tritt ein großer Induktionsfluß auf. Beides stellt an die Relaiskontakte hohe Anforderungen.

Darüber hinaus induzieren die Einschaltstromstöße des Transformators in parallel verlegte Signalleitungen hohe Ströme, die die Funktion weiterer elektronischer Baugruppen stören können, oder diese sogar zerstören können.

Aufgabe der Erfindung ist es, eine Schalteinrichtung der eingangs genannten Art vorzuschlagen, bei der das Schalten der induktiven Last praktisch nicht mit Stromstößen verbunden ist, jedoch nicht ein Triac über die gesamte Einschaltdauer der Last den Laststrom führt.

Erfindungsgemäß ist obige Aufgabe bei einer Schalteinrichtung der eingangs genannten Art dadurch gelöst, daß parallel zum Schaltkontakt ein Triac geschaltet ist, daß die Schalteinrichtung auf ein Einschaltsignal den Triac im Stromnulldurchgang während einer Netzspannungshalbwelle zündet und danach den Schaltkontakt schließt, so daß dieser den Laststrom führt, und daß die Schalteinrichtung auf ein Abschaltsignal den Schaltkontakt öffnet und der Triac den Laststrom übernimmt und beim folgenden Stromnulldurchgang abschaltet.

Bei der induktiven Last, speziell dem Transformator, ist der Stromnulldurchgang gegenüber dem Spannungsnulldurchgang um einen Winkel β verschoben. Dieser hängt von der magnetischen Hysterese der im Tranformator verwendeten Eisensorte ab. Über den Triac wird der Transformator im Stromnulldurchgang, also gegenüber dem Spannungsnulldurchgang um den Phasenwinkel β verschoben ans Netz gelegt. In diesem Moment tritt kein hoher Induktionsfluß auf, so daß sich auch kein Einschaltstromstoß ergibt. Gleich nach dem Zünden des Triacs übernimmt der Schaltkontakt den Laststrom. Er führt den Laststrom, bis ein Abschaltsignal auftritt. Dann öffnet der Schaltkontakt und der Triac übernimmt wieder den Laststrom, bis er kurz danach abschaltet.

Es ist hier also erreicht, daß der Triac die Schaltpunkte festlegt, jedoch nicht den Laststrom während der gesamten Einschaltdauer führt. Der Triac und insbesondere sein Kühlkörper braucht dementsprechend nicht auf eine hohe Leistung ausgelegt zu sein. Es ist auch möglich, auf einen Kühlkörper zu verzichten.

Andererseits stören die gewöhnlich großen Toleranzen der Schaltzeiten des Relais nicht. Denn dieses bestimmt nicht den Einschaltzeitpunkt und den Ausschaltzeitpunkt. Der Kontaktverschleiß des Schaltkontakts ist gering. Dies erhöht die Lebensdauer des Relais wesentlich.

Einschaltstromstöße, die elektronische Schaltungsteile des den Transformator aufweisenden Geräts stören könnten, treten nicht auf.

Die Schalteinrichtung schaltet den Triac nach dem Spannungsnulldurchgang mit einer Verzögerungszeit ein, die dem Phasenwinkel zwischen der Spannung und dem Magnetisierungsstrom der induktiven Last entspricht. Dieser Phasenwinkel ist bei Transformatoren meist bekannt. Dementsprechend wird dann die Verzögerungszeit eingestellt. Weist die Hysterese des Transformators aufgrund der verwendeten Eisensorten größere Toleranzen auf, dann kann die Schalteinrichtung mit einem Nullstromindikator versehen sein, der den Stromnulldurchgang des Magnetisierungsstroms des Transformators erfaßt. Hieraus ergeben sich dann der tatsächliche Phasenwinkel und die einzustellende Verzögerungszeit.

In bevorzugter Ausgestaltung der Erfindung - schaltet der Triac während Spannungshalbwellen gleicher Polarität ein und ab. Dadurch ist erreicht, daß die Hysteresekurve des Transformators in jeder Einschaltdauer voll durchlaufen wird. Das Abschalten erfolgt bei einem bekannten Remanenzwert, bei dem dann nachfolgend wieder eingeschaltet wird.

Vorzugsweise schließt die Schalteinrichtung den Schaltkontakt noch während der Spannungshalbwelle der einen Polarität, in der der Triac zündet, und sie öffnet den Schaltkontakt in einer Halbwelle der anderen Polarität.

Weitere vorteilhafte Ausgestaltungen der Erfindung ergeben sich aus weiteren Unteransprüchen und der folgenden Beschreibung eines Ausführungsbeispiels. In der Zeichnung zeigen:

Figur 1 ein Blockschaltbild der Schalteinrichtung und

Figur 2 Zeitdiagramme, wobei

Figur 2a die Netzspannung und den Magnetisierungsstrom,

Figur 2b das Ansteuersignal des Relais,

Figur 2c die Schaltstellungen des Relaiskontakts,

Figur 2d das Ansteuersignal des Triacs und

Figur 2e den Stromfluß im Triac darstellen.

An den Polen(L,Mp) der Netzwechselspannung liegt ein Netzteil(1), das eine Gleichspannung für eine Steuerschaltung(2) erzeugt.

Einer Primärwicklung(3) eines Transformators(4) ist ein Triac(5) in Reihe geschaltet. Parallel zu diesem liegt ein Schaltkontakt(6) eines Relais(7). Diese Reihenschaltung liegt an den Polen(L,Mp) des Netzes.

Der Steuerschaltung(2) ist ein Koppelnetzwerk(8) nachgeschaltet, das den Triac(5) steuert. Das Relais(7) liegt an einem weiteren Ausgang der Steuerschaltung(2).

An die Pole(L,Mp) ist ein Nullspannungsdetektor(9) angeschlossen, der an einem Eingang der Steuerschaltung(2) liegt.

An einen weiteren Eingang der Steuerschaltung(2) ist ein Schalter(10) angeschlossen, der ein Einschalt-oder Ausschaltsignal an die Steuerschaltung(2) legt. Auf das Einschaltsignal hin soll der Transformator(4) eingeschaltet werden. Entsprechend soll er auf das Ausschaltsignal hin abgeschaltet werden. Der Schalter(10) ist von einer nicht näher dargestellten Einrichtung gesteuert, die die Einschaltdauer des Transformators(4) bestimmt.

Die Funktionsweise der beschriebenen Schaltung ist etwa folgende:

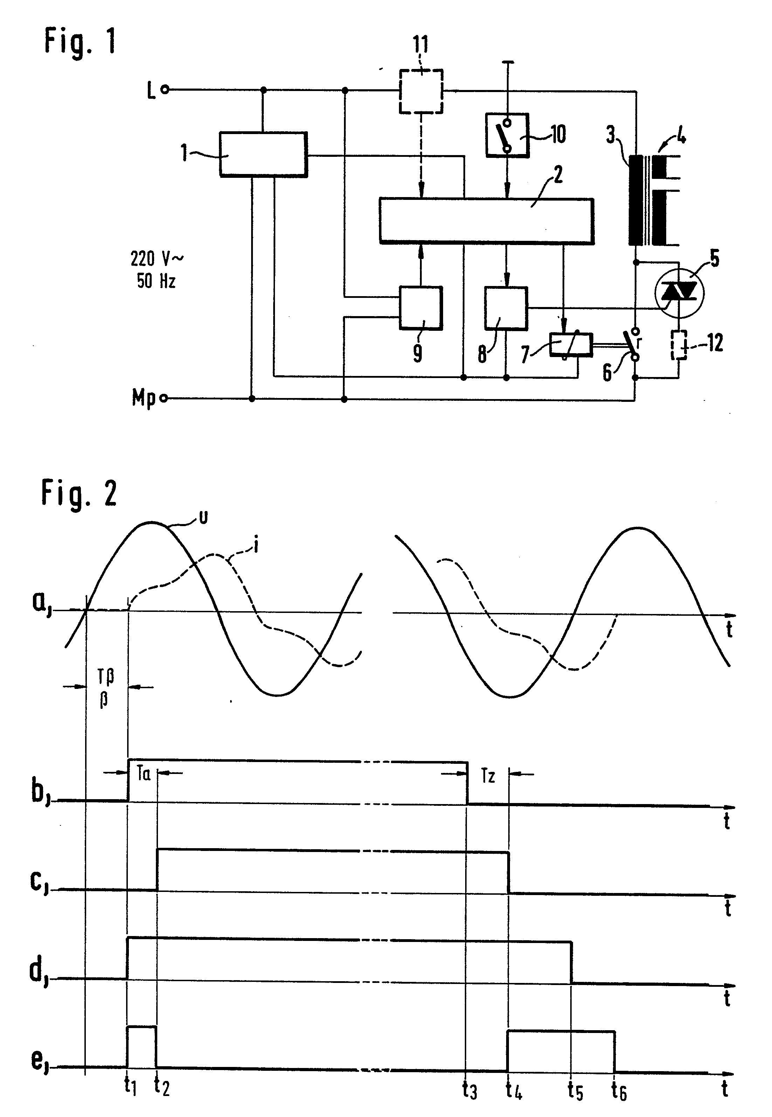

In Figur 2 ist gezeigt, daß der Magnetisierungsstrom(i) des Transformators(4) gegenüber der Netzspannung(u) phasenverschoben ist. Zwischen dem ansteigenden Nulldurchgang der Netzspannung(u) und dem ansteigenden Nulldurchgang des Magnetisierungsstromes(i) besteht ein Phasenwinkel($\beta$) (vgl. Figur 2). Dieser Phasenwinkel($\beta$) ist für den verwendeten Transformator bekannt. Er liegt unter 90°. Dem Phasenwinkel($\beta$) entspricht eine bestimmte Verzögerungszeit(T$\beta$). Diese Verzögerungszeit-(T$\beta$) ist in der Steuerschaltung(2) gespeichert.

Hat der Schalter(10) ein Einschaltsignal abgegeben, ann erfaßt die Steuerschaltung(2) den nächsten positiven Nulldurchgang der Netzspannung und gibt nach der Verzögerungszeit(T$\beta$) zum Zeitpunkt(t1) ein Ansteuersignal an den Triac(5) (vgl. Figur 2d) und ein Ansteuersignal an das Relais(7) (vgl. Figur 2b). Der Triac(5) zündet sofort, also praktisch im Nulldurchgang des Magnetisierungsstroms und legt damit die Primärwicklung(3) an Spannung. Ein störender Einschaltstromstoß entsteht nicht, da im Einschaltmoment praktisch kein Induktionsfluß des Transformators(4) auftritt.

Der Schaltkontakt(6) wird mit einer gewissen Anzugsverzögerung(Ta) zum Zeitpunkt(t2) geschlossen (vgl. Figur 2c). Der Schaltkontakt(6) übernimmt dabei den Triac(5) wird stromlos. Er war bis dahin nur während eines Teils einer halben Periode der Netzspannung stromführend.

Gibt der Schalter(10) ein Abschaltsignal, darin - schaltet die Steuerschaltung(2) das Ansteuersignal des Relais(7) zu einem Zeitpunkt(t3) ab (vgl. Figur 2b), wobei der Zeitpunkt(t3) in einer Spannungshalbwelle - in Fig.2 negativer Spannungshalbwelle - liegt, deren Polarität gegenüber der Polarität der Spannungshalbwelle, bei der das Einschalten erfolgte, umgekehrt ist. Nach einer gewissen Abfallverzögerungszeit(Tz) öffnet der Schaltkontakt(6) zum Zeitpunkt(t4). Das Ansteuersignal des Triacs-(5) (vgl. Figur 2d) liegt noch an und der Triac(5) übernimmt den Laststrom (vgl. Figur 2e).

Beim folgenden Nulldurchgang der Netzspannung(u) schaltet die Steuerschaltung(2) das Ansteuersignal des Triacs(5) zum Zeitpunkt-(t5) ab (vgl. Figur 2d). Der Triac(5) leitet noch bis zum nächsten Nulldurchgang des Stroms. Dann wird zum Zeitpunkt(t6) die Primärwicklung(3) abgeschaltet. Am Transformator(4) verbleibt die bekannte Remanenz, nämlich die Remanenz, die dem Phasenwinkel($\beta$) entspricht. Auch die Dauer zwischen den Zeitpunkten (t6) und (t4) ist sehr kurz im Vergleich zu der Einschaltdauer zwischen den Zeitpunkten (t4) und (t1).

Beim danach folgenden Wiedereinschalten wird dann in der Hysteresekurve an der Stelle weitergefahren, an der die Primärwicklung abgeschaltet wurde, nämlich beim Magnetisierungsstrom(i) = 0, bzw. beim Phasenwinkel($\beta$).

In Figur 1 ist strichliert ein Nullstromdetektor-(11) dargestellt. Dieser ist dann vorgesehen, wenn aufgrund von größeren Toleranzen der Hysteresekurve die Verzögerungszeit(T$\beta$) nicht hinreichend genau voreingestellt werden kann. Der Nullstromdetektor(11) erfaßt den Nulldurchgang des Stroms(i). Die Steuerschaltung(2) ermittelt daraus die nötige Verzögerungszeit(T$\beta$).

In Figur 1 ist weiterhin strichliert ein Vorwiderstand(12) des Triacs(5) gezeigt. Durch den Vorwiderstand(12) wird an den Schaltkontakt(6) eine Spannung gelegt. Diese führt dazu, daß am Schaltkontakt(6) eine gegebenenfalls vorhandene Oxidschicht durchschlagen wird.

Am Schaltkontakt(6) können bei längerem Betrieb Materialwanderungen in einer Richtung auftreten. Um diese zu vermeiden, kann die Steuerschaltung(2) so ausgelegt sein, daß sie den Transformator(4) abwechselnd in der negativen und der positiven Spannungshalbwelle vom Netz trennt und ihn in entsprechend umgekehrter Reihenfolge in der positiven und der negativen Spannungshalbwelle wieder an das Netz schaltet.

## Ansprüche

1. Schalteinrichtung für eine induktive Last, insbesondere einen Transformator eines Mikrowellenkochgeräts, mit einem Schaltkontakt eines Relais in Reihe zur Last,
dadurch gekennzeichnet,
daß parallel zum Schaltkontakt(6) ein Triac(5) geschaltet ist, daß die Schalteinrichtung auf ein Einschaltsignal den Triac(5) im Stromnulldurchgang während einer Netzspannungshalbwelle zündet und danach den Schaltkontakt(6) schließt, so daß dieser den Laststrom führt, und daß die Schalteinrichtung auf ein Abschaltsignal den Schaltkontakt(6) öffnet und der Triac(5) den Laststrom übernimmt und beim folgenden Stromnulldurchgang abschaltet.

2. Schalteinrichtung nach Anspruch 1,
dadurch gekennzeichnet,
daß die Schalteinrichtung nach dem Spannungsnulldurchgang en Triac(5) mit einer Verzögerungszeit(T$\beta$) einschaltet, die dem Phasenwinkel($\beta$) zwischen den Nulldurchgängen der Spannung und des Magnetisierungsstromes der induktiven Last entspricht.

3. Schalteinrichtung nach Anspruch 1 oder 2,
dadurch gekennzeichnet,
daß der Triac(5) während Spannungshalbwellen gleicher Polarität ein-und abschaltet.

4. Schalteinrichtung nach einem der vorhergehenden Ansprüche,
dadurch gekennzeichnet,
daß die Schalteinrichtung den Schaltkontakt(6) noch während der Spannungshalbwelle der einen Polarität schließt, in der der Triac(5) zündet, und den Schaltkontakt(6) in einer Halbwelle der anderen Polarität öffnet.

5. Schalteinrichtung nach einem der vorhergehenden Ansprüche,
dadurch gekennzeichnet,
daß eine Steuerschaltung(2) mit einem Nullspannungsdetektor(9) vorgesehen ist, die im Anschluß an einen Spannungsnulldurchgang nach der Verzögerungszeit(T$\beta$) gleichzeitig ein Ansteuersignal für das Relais(7) und den Triac(5) erzeugt und daß das Ansteuersignal für den Triac(5) erst in dem Spannungsnulldurchgang endet, der auf das Öffnen des Schaltkontakts(6) folgt.

6. Schalteinrichtung nach einem der vorhergehenden Ansprüche,
dadurch gekennzeichnet,
daß die Schalteinrichtung mit einem Nullstromdetektor(11) versehen ist, der den Stromnulldurchgang des Magnetisierungsstromes(i) des Transformators(4) erfaßt.

7. Schalteinrichtung nach einem der vorhergehenden Ansprüche,
dadurch gekennzeichnet,
daß die Schalteinrichtung den Schaltkontakt(6) periodisch vom Einschalten bei der ersten Polarität und Ausschalten bei der zweiten Polarität auf Einschalten bei der zweiten Polarität und Ausschalten bei der ersten Polarität umsteuert.

# Fig. 1

220 V~
50 Hz

# Fig. 2